Europäisches Patentamt

European Patent Office

Office européen des brevets

(19)

(11) Veröffentlichungsnummer: **0 004 634**
**A1**

## (12) EUROPÄISCHE PATENTANMELDUNG

(21) Anmeldenummer: 79100926.9

(22) Anmeldetag: 28.03.79

(51) Int. Cl.²: **C 04 B 25/02**
**C 04 B 21/08**

(30) Priorität: 06.04.78 DE 2814892

(43) Veröffentlichungstag der Anmeldung:
17.10.79 Patentblatt 79/21

(84) Benannte Vertragsstaaten:
CH DE FR GB

(71) Anmelder: BASF Aktiengesellschaft
Carl-Bosch-Strasse 38
D-6700 Ludwigshafen(DE)

(72) Erfinder: Woerner, Frank Peter, Dr.
Am Altenbach 18
D-6706 Wachenheim(DE)

(72) Erfinder: Mahnke, Harald, Dr.
Osloer Weg 48
D-6700 Ludwigshafen(DE)

(72) Erfinder: Weber, Heinz, Dr.
Am Wehrhaus 26
D-6718 Gruenstadt 1(DE)

(72) Erfinder: Sand, Hermann, Dr.
Im Sandgarten 11
D-6706 Wachenheim(DE)

(72) Erfinder: Trautz, Volker, Dr.
Rua Sa Matheus
299 Granja Julieta Sao Paulo(BR)

(54) Nichtbrennbarer Dämmstoff.

(57) Der nichtbrennbare Dämmstoff enthält anorganische Leichtpartikel und gegebenenfalls faserige oder körnige anorganische Zusatzstoffe, die durch organische, polymere Bindemittel miteinander verbunden sind. Um die Entwicklung toxischer Gase im Brandfall zu unterdrücken, sind dem Dämmstoff 0,1 bis 15 Gew.% einer Verbindung des dreiwertigen Bors zugemischt.

EP 0 004 634 A1

BASF Aktiengesellschaft                    O.Z. 0050/033110

### Nichtbrennbarer Dämmstoff

Die Erfindung betrifft nichtbrennbare Dämmstoffe für Bau- und Isolierzwecke auf Basis von anorganischen Leichtpartikeln, die durch polymere organische Bindemittel miteinander verbunden sind. Solche Dämmstoffe sind z.B. in den DE-OS 25 45 728 und 26 30 834 beschrieben. Im Brandfall verbrennen oder verschwelen die organischen Bindemittel, wobei sich je nach Temperatur und Luftzufuhr, sowie nach Art und Menge des Bindemittels größere oder kleinere Mengen toxischer Gase, z.B. CO oder HCN bilden können. Damit die Dämmstoffe den in DIN 4102 festgelegten Anforderungen für Baustoffe der Klasse A 2 genügen, darf der Gehalt an toxischen Gasen in den Verschwelungsprodukten bestimmte Werte nicht überschreiten.

Der Erfindung lag also die Aufgabe zugrunde, den Gehalt an toxischen Gasen in den Verschwelungsprodukten von Dämmstoffen herabzusetzen. Diese Aufgabe wird erfindungsgemäß durch den Zusatz von Borverbindungen gelöst.

Gegenstand der Erfindung ist demzufolge ein nichtbrennbarer Dämmstoff, enthaltend

A) 98,9 bis 50 Gew.% anorganischer Leichtpartikel,

Dd/ro

B) 0 bis 40 Gew.% faseriger oder körniger anorganischer Zusatzstoffe,

C) 1 bis 30 Gew.% eines organischen, polymeren Bindemittels sowie

D) 0,1 bis 15 Gew.% einer Verbindung einer Verbindung des dreiwertigen Bors.

Es ist nicht geklärt, ob die Borverbindung katalytisch in die Gleichgewichte eingreift, die bei der Verbrennung der organischen Bindemittel eine Rolle spielen, oder ob die Ausbildung glasartiger Produkte aus der Borverbindung und dem organischen Bindemittel beim Verschwelungsprozeß ausschlaggebend ist. In diesem Zusammenhang ist bemerkenswert, daß ähnliche Verbindungen, wie z.B. $Al(OH)_3$, $H_3PO_4$ oder $Na_2HPO_4$ keine signifikante Wirksamkeit zeigen.

In Bezug auf die Art der Leichtpartikel A, der Zusatzstoffe B und der Bindemittel C unterscheiden sich die Dämmstoffe nicht wesentlich von den in den DE-OS 25 45 728 und 26 30 834 beschriebenen.

Die anorganischen Leichtpartikel A haben vorzugsweise einen mittleren Teilchendurchmesser zwischen 0,05 und 3 mm und eine Schüttdichte zwischen 30 und 150 g/l. Bevorzugt werden silikatische Materialien verwendet, wie wasserunlösliche Alkalisilikate oder Silikate der 2. und 3. Hauptgruppe des Periodensystems. Besonders bevorzugt sind geblähter Perlit oder Vermiculit; geeignet sind aber auch geblähtes Schaumglas, Flugasche oder geblähter Gips.

Die Dämmstoffe können gegebenenfalls bis zu 40 Gew.% faseriger oder körniger anorganischer Zusatzstoffe B enthalten. Faserige Zusatzstoffe verbessern den Elastizitätsmodul der Baustoffe. Die Fasern sollen dabei eine Länge von 2 mm bis 3 cm aufweisen. Bevorzugt sind Glasfasern, die in Mengen von 2 bis 10 Gew.%, und Stein- oder Mineralwolle, die in Mengen von 5 bis 30 Gew.%, jeweils bezogen auf die Gesamtmischung, eingesetzt werden. Körnige Zusätze verbessern die Festigkeit der Baustoffe. Die Körner sollen einen Durchmesser von 1 bis 100 µm aufweisen. Bevorzugt sind Talkum oder Gips, die in Mengen von 15 bis 30 Gew.% eingesetzt werden.

Die Leichtpartikel und gegebenenfalls Zusatzstoffe sind durch 1 bis 30, vorzugsweise 2 bis 20 Gew.% eines organischen, polymeren Bindemittels C miteinander verbunden. Die Bindemittel sind vorzugsweise Polykondensate mit einer Dauergebrauchstemperatur nach DIN 53 446 von mehr als 100°C. Als Dauergebrauchstemperatur ist die Temperatur definiert, bei welcher der betreffende Stoff 25 000 Stunden an der Luft gelagert werden kann, ohne daß sich seine Eigenschaften erkennbar ändern. Prinzipiell können jedoch auch Polymerisate als Bindemittel eingesetzt werden.

Bei der Herstellung der Dämmstoffe werden bevorzugt 10 bis 85, vorzugsweise 40 bis 75 gew.%ige, vorzugsweise wäßrige Dispersionen oder Lösungen von zum hochpolymeren Bindemittel C aushärtbaren Vorkondensaten eingesetzt, die gegebenenfalls übliche Dispergierstabilisatoren, Vernetzungsmittel, Katalysatoren, Verlaufmittel oder andere Zusatzstoffe in geringen Mengen enthalten können. Die Vorkondensate härten bei erhöhten Temperaturen, gegebenenfalls in Gegenwart von Vernetzungsmitteln oder Vernetzungskatalysatoren unter Weiterkondensation bzw. Vernetzung zum hochpolymeren Bindemittel C aus. Grundsätzlich können aber auch Dispersionen oder Lösungen von solchen Bindemitteln C eingesetzt werden, die bereits in hochmolekularer Form vorliegen.

Bevorzugte Bindemittel C sind Kondensate des Formaldehyds mit Phenol, Harnstoff und Melamin bzw. mit deren Derivaten, insbesondere ein Phenol/Formaldehyd-Kondensat, welches 1 bis 30 Gew.% eines Alkylphenol/Phenol/Formaldehyd-Kondensationsproduktes enthält. Gut geeignet sind ferner Polyesterimide, Polyamidimide, Polyimide, Polyester, Polyamide sowie Polymerisate von Acrylestern und Vinylestern; insbesondere Copolymerisate auf Basis von Vinylpropionat, Butylacrylat oder Äthylhexylacrylat.

Als Komponente D wird eine Borverbindung eingesetzt. Grundsätzlich können alle in Frage kommenden Verbindungen verwendet werden. Zweckmäßigerweise werden jedoch solche eingesetzt, die billig sind, selbst nicht toxisch sind und bei erhöhter Temperatur auch keine toxischen Gase liefern. Die Verbindungen sollen ferner vorzugsweise unter den Herstellbedingungen und Anwendungsbedingungen der Dämmstoffe stabil sein.

Bevorzugte Verbindungen sind Boroxid, Borsäure und Borate, insbesondere Borax, Natriumperborat und Natriummetaborat. Auch Borhalogenide, Borstickstoff und Borphosphat sind geeignet.

Die Dämmstoffe können in der Praxisanwendung übliche Deck-, Schutz- und Verstärkungsschichten enthalten, wie z.B. aus Asbestzement, Gipskarton oder Metallblechen. Auch Verbund-Dämmstoffe nach den DE-OS 27 00 608 und 27 00 217 sollen hier mitumfaßt sein.

Die Dämmstoffe haben vorzugsweise eine Stärke von 10 mm bis 100 mm, insbesondere von 10 bis 60 mm. Ihre Dichte liegt vorzugsweise zwischen 70 und 300 g/l.

0004634

Die Herstellung der Dämmstoffe geschieht vorzugsweise nach den in den DE-OS 26 31 727 bzw. 26 30 834 beschriebenen Verfahren durch Vermischen von anorganischen Leichtpartikeln A und ggf. Zusatzstoffen B mit einer wäßrigen Dispersion oder Lösung des Bindemittels C bzw. eines zum Bindemitteln C aushärtbaren Vorkondensats, Trocknen und Verpressen der Mischung sowie ggf. Aushärten.

Es hat sich als zweckmäßig erwiesen, bei der Herstellung der Dämmstoffe die Borverbindung D als Feststoff zusammen mit den anorganischen Leichtpartikeln A einzumischen.

Die in den Beispielen genannten Teile und Prozente beziehen sich auf das Gewicht.

In den Beispielen wurden jeweils 60 x 2 x 1,5 cm große Proben der Dämmstoffe getestet. Sie wurden in Anlehnung an DIN 53 436 E in einem Verschwelungsrohr bei 400°C Vergleichskörpertemperatur in einem Luftstrom von 300 1/h verschwelt. Die in den Verschwelungsgasen enthaltenen Mengen an $CO$, $CO_2$ und HCN wurden mittels Adsorptionsröhrchen der Fa. Dräger bestimmt.

In den Beispielen wurden Dämmplatten folgender Zusammensetzung eingesetzt:

Tabelle 1

Zusammensetzung der Dämmplatten

| Platte | Zusammensetzung der Mischung A+B+C |
|--------|-------------------------------------|
| a | 85 % geblähter Perlit (mittlerer Teilchendurchmesser 0,7 mm, Schüttdichte 50 g/l) |
| | 14 % Phenolharz (Verhältnis Phenol : Formaldehyd = 1 : 1,4) |

Platte    Zusammensetzung

1 % Nonylphenol/Phenol/Formaldehyd-Kondensations-
produkt (0,7 : 0,3 : 2)
(Harze mit p-Toluolsulfonsäure gehärtet)


b        85 % geblähter Perlit
15 % Harnstoff/Formaldehyd-Harz (1 : 1,4)
(Harz mit Ammonchlorid gehärtet)


c        85 % geblähter Perlit
15 % modifiziertes Melaminharz (aus 22 % Melamin,
28 % Harnstoff, 8 % Phenol und 41 % Formaldehyd)


d        85 % geblähter Perlit
14 % Acrylatharz (aus Äthylhexylacrylat, Methylmethacrylat, Acrylsäure und Acrylnitril)
1 % Nonylphenol/Phenol/Formaldehyd-Harz


e        92 % geblähter Perlit
8 % Polyesterimid-Harz (aus Terephthalsäure, Trimellithsäureanhydrid, Glykol, Diaminodiphenylmethan und Trishydroxyäthylisocyanurat)


Bei der Herstellung der Platten wurden auf 100 Teile der
Mischungen die in den Beispielen angegebenen Mengen an
Zusatzstoffen D zugesetzt.


Beispiele


Es wurden Dämmplatten entsprechend der Zusammensetzungen
a-e hergestellt, wobei wechselnde Mengen verschiedener
Zusatzstoffe zugesetzt wurden. Die Platten wurden der
oben beschriebenen Verschwelung unterworfen und die
entstehenden Gase gemessen. Ergebnisse siehe Tabelle 2.

0004634

Tabelle 2

| Beispiel | Plattentyp | Zusatz | Teile | CO | $CO_2$ | HCN (ppm) |
|---|---|---|---|---|---|---|
| 1/1 | a | - | - | 7 800 | 7 900 | - |
| 1/2 | a | $H_3BO_3$ | 4 | 5 200 | 4 300 | - |
| 1/3 | a | $B_2O_3$ | 5 | 3 800 | 3 000 | - |
| 1/4 | a | Borax | 5 | 5 100 | 9 300 | - |
| 1/5 | a | Natrium-perborat | 5 | 6 300 | 12 400 | - |
| 1/6 | a | Natrium-metaborat | 5 | 5 100 | 10 500 | - |
| 2/1 | b | - | - | 1 000 | 1 200 | 50 |
| 2/2 | b | $H_3BO_3$ | 5 | 100 | 1 000 | 10 |
| 3/1 | c | - | - | 1 000 | 1 000 | 150 |
| 3/2 | c | $H_3BO_3$ | 5 | 600 | 1 500 | 20 |
| 4/1 | d | - | - | 3 700 | 5 800 | 50 |
| 4/2 | d | $H_3BO_3$ | 5 | 2 000 | 3 000 | 30 |
| 5/1 | e | - | - | 1 000 | 1 800 | 50 |
| 5/2 | e | $H_3BO_3$ | 5 | 1 000 | 1 000 | 5 |

0004634

O.Z. 0050/033110

BASF Aktiengesellschaft

Patentansprüche

1. Nichtbrennbarer Dämmstoff enthaltend

A) 98,9 bis 50 Gew.% anorganische Leichtpartikel,

B) 0 bis 40 Gew.% faseriger oder körniger anorganischer Zusatzstoffe,

C) 1 bis 30 Gew.% eines organischen, polymeren Bindemittels,

gekennzeichnet durch den Gehalt von

D) 0,1 bis 15 Gew.% einer Verbindung des dreiwertigen Bors.

2. Nichtbrennbarer Dämmstoff nach Anspruch 1, dadurch gekennzeichnet, daß die anorganischen Leichtpartikel A geblähter Perlit oder Vermiculit sind.

3. Nichtbrennbarer Dämmstoff nach Anspruch 1, dadurch gekennzeichnet, daß die Zusatzstoffe B Glasfasern einer Länge zwischen 2 mm und 5 cm sind.

4. Nichtbrennbarer Dämmstoff nach Anspruch 1, dadurch gekennzeichnet, daß die Bindemittel C Polykondensate sind.

5. Nichtbrennbarer Dämmstoff nach Anspruch 1, dadurch gekennzeichnet, daß die Bindemittel C Kondensate des Formaldehyds mit Phenol, Harnstoff, Melamin oder deren Derivaten sind.

6. Nichtbrennbarer Dämmstoff nach Anspruch 1, dadurch gekennzeichnet, daß die Verbindung D ein Oxid, eine Säure oder ein Salz ist.

7. Nichtbrennbarer Dämmstoff nach Anspruch 1, dadurch gekennzeichnet, daß die Verbindung D $B_2O_3$, $H_3BO_3$, Borax, Natriummetaborat oder Natriumperborat ist.

**Europäisches Patentamt**

**EUROPÄISCHER RECHERCHENBERICHT**

0004634

Nummer der Anmeldung

EP 79 10 0926

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 447 060 (MESSERSCHMITT-BOELKOW-BLOHM) <br><br> * Seite 13, Ansprüche 1-3,5; Seite 7, Zeilen 11-19 * <br><br> -- | 1,4-7 |
| | FR - A - 2 236 893 (FERRO CORP.) <br><br> * Seite 5, Zeilen 19-36; Seite 4, Zeilen 6-8; Seite 6, Zeilen 12-16 * <br><br> -- | 1,4-6 |
| | CHEMICAL ABSTRACTS, Vol. 86, 1977, Zusammenfassung Nr. 56353k, Columbus, Ohio, USA, ISHIKAWA TAKASHI; " Fire- and heat-resistant synthetic resins", Seite 50, rechte Spalte <br><br> & JP - A - 76 125 150 (KOKAI) <br><br> -- | 1,2,6,7 |
| | GB - A - 1 158 591 (C.A. REDFARN) <br> * Seite 2, Ansprüche 1,2,5,6,9 * <br><br> -- | 1,2,4,5 |
| A | J.W. LYONS: "The chemistry and uses of fire retardants", 1970, Wiley Interscience, New York, Seite 418, Zeilen 13-15 <br><br> -- | |
| A | US - A - 2 941 899 (J.P. STALEGO) | |
| A | DE - A - 2 447 977 (STAMICARBON) <br><br> ---- | |

**KLASSIFIKATION DER ANMELDUNG (Int.Cl.²)**

C 04 B 25/02
21/08

**RECHERCHIERTE SACHGEBIETE (Int. Cl.²)**

C 04 B 25/00
21/00
43/00
C 09 K 3/00
C 08 K 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Den Haag | 11-07-1979 | DAELEMAN |

EPA form 1503.1 06.78